# EUROPÄISCHE PATENTSCHRIFT

(11) **EP 2 418 460 B1**
(45) Veröffentlichungstag und Bekanntmachung des Hinweises auf die Patenterteilung: **16.01.2019**
(21) Anmeldenummer: 11168865.1
(22) Anmeldetag: 07.06.2011
(51) Int. Cl.: G01C 21/32, G06T 11/20, G09B 29/00

(54) **Verfahren zur Darstellung eines Straßenverlaufes auf einer Anzeigeeinrichtung und zur Abbildung eines Straßenverlaufes in einer digitalen Straßenkarte**
Method for representing a road course on a display device and for imaging a road course in a digital street map
Procédé de représentation d'un tracé de route sur un dispositif d'affichage et procédé d'imagerie d'un tracé de route sur une carte routière numérique

(30) Priorität: 09.08.2010 DE 102010039076
(43) Veröffentlichungstag der Anmeldung: 15.02.2012
(73) Patentinhaber: Robert Bosch GmbH, 70442 Stuttgart (DE)
(72) Erfinder: Vogel, Andreas, 31139 Hildesheim (DE); Mueller, Guido, 06484 Quedlinburg (DE); Varchmin, Axel, 31180 Giesen (DE); Moormann, Frank, 31039 Rheden/Wallenstedt (DE)

(56) Entgegenhaltungen:
- WO-A1-2007/020045
- JP-A- 2001 148 026
- US-B1- 7 084 882

## Beschreibung

Die Erfindung betrifft ein Verfahren zur Darstellung eines Straßenverlaufes auf einer Anzeigeeinrichtung und zur Abbildung eines Straßenverlaufes in einer digitalen Straßenkarte.

### Stand der Technik

Navigationssysteme für Kraftfahrzeuge haben in den letzten Jahren eine weite Verbreitung gefunden. Als Grundlage für die Fahrzeugnavigation dienen dabei digitalisierte Straßenkarten, aus denen ein Straßenverlauf rekonstruiert wird, welcher dem Fahrer anschließend auf einer Anzeigeeinrichtung in einem voreingestellten Darstellungsmaßstab, wie zum Beispiel einem Display, angezeigt wird.

Ein übliches Verfahren zur Rekonstruktion eines Straßenverlaufes sieht dabei vor, in der digitalisierten Straßenkarte Stützstellen abzuspeichern und diese zu einem Polygonzug zu verbinden. Mit dem Begriff Polygonzug werden dabei aneinander gereihte, stückweise geradlinige Verbindungsstrecken zwischen den einzelnen Stützstellen bezeichnet.

Andere bekannte Verfahren nutzen Konstruktionsparameter einzelner Straßensegmente, um daraus den Straßenverlauf zu berechnen. Dabei werden einzelnen Straßensegmenten geometrische Formen, wie Gerade, Kreisbogen oder Klothoide, zugewiesen und die diesen Formen entsprechenden Parameter in der digitalisierten Straßenkarte hinterlegt.

Aus der WO 2005/111543 A1 ist ein Verfahren zur Unterteilung des Straßenverlaufes in digitalen Straßenkarten in Segmente bekannt, bei dem ausgehend von digitalen Straßenkarten, in denen der Straßenverlauf in aufeinanderfolgende Segmente unterteilt ist, Segmentgrenzen über Segmentanfangs- und Segmentendpunkte festgelegt werden. Dabei werden die Segmentanfangs- und Segmentendpunkte so gewählt, dass sich die Gestalt der Segmente zwischen den Segmentanfangs- und Segmentendpunkten nicht ändert.

Aus der WO 2005/111543 A1 ist auch ein Verfahren zur Berechnung des Straßenverlaufs anhand von digitalen Straßenkarten bekannt, bei dem die Strasse in aufeinanderfolgende Segmente unterteilt ist, denen je ein Segmentanfangspunkt und ein Segmentendpunkt zugeordnet ist, wobei anhand der Anzahl zwischen den Segmentanfangs- und Segmentendpunkten angeordneter Stützpunkte und/oder Übergangsbedingungen zwischen den Segmenten und/oder eines Attributes die Gestalt des Segmentes festgelegt und dessen Verlauf berechnet wird.

In der US 7 084 882 B1 ist ein Verfahren zur Darstellung der Form von geographischen Merkmalen, insbesondere von Straßensegmentformen beschrieben. Zwei miteinander verbundene Straßensegmente können mittels einem stetigen, nicht-uniformen B-Spline dargestellt werden. Gerade Straßensegmente können durch Geraden dargestellt werden, welche durch Formpunkte verlaufen, welche auf den geographischen Merkmalen liegen. Die B-Splines werden durch Kontrollpunkte bestimmt, welche auf oder nahe dem darzustellenden geographischen Merkmal liegen.

In der WO 2007/020045 A1 ist ein Verfahren zur Generierung einer Kartendarstellung mit Verläufen von Straßen beschrieben. Ein Straßenverlauf wird durch eine Abfolge aneinander gereihter geometrischer Elemente abgebildet, welche Kreisbögen und gerade Strecken umfassen. Für Anwendungen mit hoher Ortsauflösung werden Klothoiden verwendet.

### Offenbarung der Erfindung

Die vorliegende Erfindung schafft ein Verfahren zur Rekonstruktion eines Kurvenverlaufes, insbesondere eines Straßenverlaufes, wobei der Kurvenverlauf in einer Datenbank, insbesondere einer digitalen Straßenkarte, in aufeinanderfolgende Segmente (4, 5, 6, 7) unterteilt ist, denen Stützstellen (8, 9, 10, 12, 14, 21, 22, 23) zugeordnet sind und zu denen eine Information über eine jeweilige geometrische Form eines Segmentes (4, 5, 6, 7) hinterlegt ist. Solange eine gewünschte Genauigkeit, mit welcher der reale Verlauf einer Kurve rekonstruiert wird kleiner als eine vorgegebene Grenzgenauigkeit ist, wird der Kurvenverlauf durch geradliniges Verbinden zumindest einer Teilmenge der Stützstellen (8, 9, 10, 12, 14, 21, 22, 23) rekonstruiert. Ansonsten wird der Kurvenverlauf in Abhängigkeit von den hinterlegten Informationen über die geometrischen Formen der Segmente (4, 5, 6, 7) sowie der Lage der jeweils zugeordneten Stützstellen (8, 9, 10, 12, 14, 21, 22, 23) berechnet. Die geometrischen Formen umfassen Geraden, Kreisbögen und Klothoiden.
Ist eine gewünschte Abbildungsgenauigkeit des Kurvenverlaufes, das heißt die Genauigkeit mit welcher der reale Verlauf einer Kurve wiedergegeben wird, kleiner als ein vorgegebener Grenzwert, wird der Kurvenverlauf erfindungsgemäß in Form eines Polygonzuges rekonstruiert. Dadurch werden aufwendige Berechnungsschritte vermieden. Werden detailgenaue Informationen über den Kurvenverlauf benötigt, wird der Kurvenverlauf dagegen mit Hilfe von geometrischen Informationen berechnet. Auf diese Weise wird eine sehr exakte Nachbildung des Kurvenverlaufes erreicht, ohne dafür eine gesteigerte Anzahl von Stützstellen zu benötigen, welche den Umfang der abzuspeichernden Datenmenge deutlich erhöhen würde. Die Erfindung geht somit von der Grundidee aus, die rechentechnisch weit weniger aufwendige Rekonstruktion des Kurvenverlaufes mit Hilfe von Polygonzügen für einen gewünschten Detaillierungsgrad zu nutzen, bei welchem die mit Hilfe dieser Methode bei vertretbarer Anzahl von Stützstellen erreichbare Abbildungsgenauigkeit ausreicht. Wohingegen bei gewünschter hoher Abbildungsgenauigkeit und damit detailgenauer Rekonstruktion die rechtentechnisch aufwendigere Rekonstruktion über geometrische Parameter genutzt wird, um die Anzahl notwendiger Stützstellen und damit den Speicherbedarf sinnvoll zu begrenzen.
Als Kurvenverlauf kann dabei, wie auch im Folgenden, jeder zumindest in Teilbereichen nichtlineare Verlauf eines linienartigen Objektes dienen, wie beispielsweise einer Straße, eines Flusses oder eines sonstigen Geländeobjektes oder auch in einer nicht erfindungsgemäßen Variante einer Zeichnungslinie in einer technischen Zeichnung.
Die vorliegende Erfindung schafft des Weiteren ein Verfahren zur Darstellung eines Kurvenverlaufes, insbesondere eines Straßenverlaufes, auf einer Anzeigeeinrichtung mit einstellbarem Darstellungsmaßstab, insbesondere in einem Kraftfahrzeug, wobei der Kurvenverlauf in einer Datenbank, insbesondere einer digitalen Straßenkarte, in aufeinanderfolgende Segmente unterteilt ist, denen Stützestellen zugeordnet sind und zu denen eine Information über eine jeweilige geometrische Form eines Segmentes hinterlegt ist. Erfindungsgemäß wird der Kurvenverlauf durch geradliniges Verbinden zumindest einer Teilmenge der Stützstellen rekonstruiert, solange der Kartenmaßstab kleiner als ein vorgegebener Grenzmaßstab ist. Erreicht der eingestellte Darstellungsmaßstab den Grenzmaßstab, so wird der Kurvenverlauf in Abhängigkeit von den hinterlegten Informationen über die geometrischen Formen der Segmente sowie der Lage der jeweils zugeordneten Stützstellen berechnet.
Für kleine Darstellungsmaßstäbe, das heißt beispielsweise für die Darstellung von Straßenkarten mit geringem Detaillierungsgrad, wird der Straßenverlauf erfindungsgemäß in Form eines Polygonzuges rekonstruiert. Dadurch werden aufwendige Berechnungsschritte vermieden. Für große Darstellungsmaßstäbe, das heißt für die Darstellung von Straßenkarten mit hohem Detaillierungsgrad, wird der Straßenverlauf dagegen mit Hilfe von geometrischen Informationen berechnet. Auf diese Weise wird eine sehr exakte Nachbildung des Straßenverlaufes erreicht, ohne dafür eine gesteigerte Anzahl von Stützstellen zu benötigen, welche den Umfang der abzuspeichernden Datenmenge deutlich erhöhen würde. Die rechentechnisch weit weniger aufwendige Rekonstruktion des Straßenverlaufes mit Hilfe von Polygonzügen wird somit für Darstellungsmaßstäbe genutzt, bei welchen die mit Hilfe dieser Methode bei vertretbarer Anzahl von Stützstellen erreichbare Abbildungsgenauigkeit ausreicht. Wohingegen bei großen Darstellungsmaßstäben, bei welchen auch nur wenige Straßen darzustellen sind, die rechentechnisch aufwendigere Rekonstruktion über geometrische Parameter genutzt wird, um die Anzahl notwendiger Stützstellen und damit den Speicherbedarf sinnvoll zu begrenzen.
Als Berechnungsmethode für große Darstellungsmaßstäbe kann zum Beispiel ein Verfahren genutzt werden, wie es aus der WO 2005/111543 A1 bekannt ist.

Als Übergangsbedingung zwischen den beiden Rekonstruktionsmethoden wird erfindungsgemäß ein Grenzmaßstab vorgegeben, welcher vorteilhaft im Bereich eines mittleren Darstellungsmaßstabes, von beispielsweise 1:100.000 oder 1:500.000, liegt. Der Grenzmaßstab ist dabei derart festzulegen, dass der Kurvenverlauf auf Basis der geometrischen Informationen berechnet wird, sobald die Anzahl der vorhandenen Stützstellen für einen Maßstab nicht mehr ausreicht, um durch geradliniges Verbinden der Stützstellen eine ausreichende Abbildungsgenauigkeit des realen Kurvenverlaufes zu gewährleisten.

Gemäß einer Ausführungsform der Erfindung wird die Anzahl der geradlinig zu verbindenden Stützstellen in Abhängigkeit von der gewünschten Genauigkeit, mit welcher der Kurvenverlauf rekonstruiert wird, oder vom eingestellten Darstellungsmaßstab festgelegt. Die Grenzabbildungsgenauigkeit oder der Grenzmaßstab sind vorteilhaft derart festgelegt, dass für die nächst kleinere Abbildungsgenauigkeit oder den nächst kleineren Maßstab ein geradliniges Verbinden aller im darzustellenden Streckenabschnitt vorhandenen Stützstellen gerade noch zu einer ausreichenden Abbildungsgenauigkeit führt. Werden noch kleinere Abbildungsgenauigkeiten oder Darstellungsmaßstäbe eingestellt, so kann der entsprechende Polygonzug "ausgedünnt" werden, das heißt es werden mit fallender gewünschter Abbildungsgenauigkeit oder fallendem Darstellungsmaßstab immer weniger Stützstellen geradlinig miteinander verbunden.

Die vorliegende Erfindung schafft weiterhin ein Verfahren zur Abbildung eines Kurvenverlaufes, insbesondere eines Straßenverlaufes, in einer Datenbank, insbesondere einer digitalen Straßenkarte, mit Hilfe von Stützstellen, wobei der Kurvenverlauf in aufeinanderfolgende Segmente unterteilt ist und den Segmenten jeweils mindestens zwei Stützstellen zugeordnet sind, von denen eine erste Stützstelle einen Segmentanfangspunkt und eine zweite Stützstelle einen Segmentendpunkt definiert, welche derart festgelegt werden, dass sich die geometrische Form des jeweiligen Segmentes zwischen den Segmentanfangs- und Segmentendpunkten nicht ändert. Erfindungsgemäß wird die Anzahl der Stützstellen für ein Segment in Abhängigkeit von einer Auflösung einer Anzeigeeinrichtung festgelegt wird, welche zur visuellen Darstellung des Kurvenverlaufes dient.

Die Abbildungsgenauigkeit eines Kurvenverlaufs durch einen Polygonzug ist einerseits abhängig von der Anzahl der zur Verfügung stehenden Stützstellen im darzustellenden Streckenabschnitt, andererseits aber auch von der Auflösung der verwendeten Anzeigeeinrichtung. Durch Festlegung der Anzahl der Stützstellen für ein Segment in Abhängigkeit von der Auflösung der Anzeigeeinrichtung kann die Anzahl der Stützstellen somit auf eine minimale Anzahl beschränkt werden, welche gerade noch ausreicht, um durch geradliniges Verbinden der Stützstellen eine geforderte Abbildungsgenauigkeit zu erzielen. Die Unterteilung des Kurvenverlaufes in aufeinander folgende Segmente und die erfindungsgemäße Festlegung der Segmentanfangs- und -endpunkte erlaubt unter Zuhilfenahme von Informationen über die geometrischen Formen der einzelnen Segmente wiederum auch die Anwendung eines Berechnungsverfahrens für den Kurvenverlauf, wie er beispielsweise aus der WO 2005/111543 A1 bekannt ist.
Da die durch geradliniges Verbinden von Stützstellen erzielbare Abbildungsgenauigkeit auch von der Form des jeweiligen Segmentes abhängt, wird die Anzahl der Stützstellen zwischen dem Segmentanfangs- und -endpunkt eines Segmentes vorteilhaft zusätzlich in Abhängigkeit von der geometrischen Form des Segmentes festgelegt.
Zur Sicherstellung einer gewünschten Abbildungsgenauigkeit durch geradliniges Verbinden der Stützstellen wird die Anzahl der Stützstellen zwischen dem Segmentanfangs- und -endpunkt eines Segmentes mit Hilfe eines Ausdünnungs-Algorithmus, wie zum Beispiel dem Douglas-Peucker-Algorithmus, festgelegt. Die Erfindung schafft weiterhin ein Computerprogramm mit Programmbefehlen zur Durchführung des erfindungsgemäßen Verfahrens sowie einen Datenträger, welcher das Computerprogramm speichert.
Außerdem schafft die Erfindung eine Anordnung zur Darstellung eines Kurvenverlaufes, insbesondere eines Straßenverlaufes in einem Kraftfahrzeug, mit einer Datenbank, insbesondere einer digitalen Straßenkarte, in welcher der Kurvenverlauf in aufeinanderfolgende Segmente unterteilt ist, denen Stützstellen zugeordnet sind und zu denen eine Information über eine jeweilige geometrische Form eines Segmentes hinterlegt ist, einer Anzeigeeinrichtung mit einstellbarem Darstellungsmaßstab und einer Auswerteeinheit, welche den Kurvenverlauf durch geradliniges Verbinden zumindest einer Teilmenge der Stützstellen rekonstruiert, solange der Darstellungsmaßstab kleiner als ein vorgegebener Grenzmaßstab ist und den Kurvenverlauf ansonsten in Abhängigkeit von den hinterlegten Informationen über die geometrischen Formen der Segmente sowie der Lage der jeweils zugeordneten Stützstellen berechnet. Die geometrischen Formen umfassen Geraden, Kreisbögen und Klothoiden.
Weitere Merkmale und Vorteile von Ausführungsformen der Erfindung ergeben sich aus der nachfolgenden Beschreibung mit Bezug auf die beigefügten Figuren.

Kurze Beschreibung der Figuren
Es zeigen:
- Figur 1: eine erste Form der Darstellung eines Kurvenverlaufs nach dem Stand der Technik,
- Figur 2: eine zweite Form der Darstellung des Kurvenverlaufs gemäß Fig. 1 nach dem Stand der Technik,
- Figur 3: eine erfindungsgemäße Darstellung des Kurvenverlaufs gemäß Fig. 1 und
- Figur 4: ein schematisches Blockschaltbild einer erfindungsgemäßen Anordnung zur Darstellung eines Kurvenverlaufes.

### Beschreibung der Ausführungsbeispiele

In den Figuren sind identische oder funktionsgleiche Komponenten jeweils mit dem gleichen Bezugszeichen gekennzeichnet.

Im Folgenden wird die Erfindung anhand einer Rekonstruktion, Darstellung und Abbildung eines Straßenverlaufes erläutert. Die Erfindung kann aber selbstverständlich auch auf andere Kurvenverläufe angewendet werden.

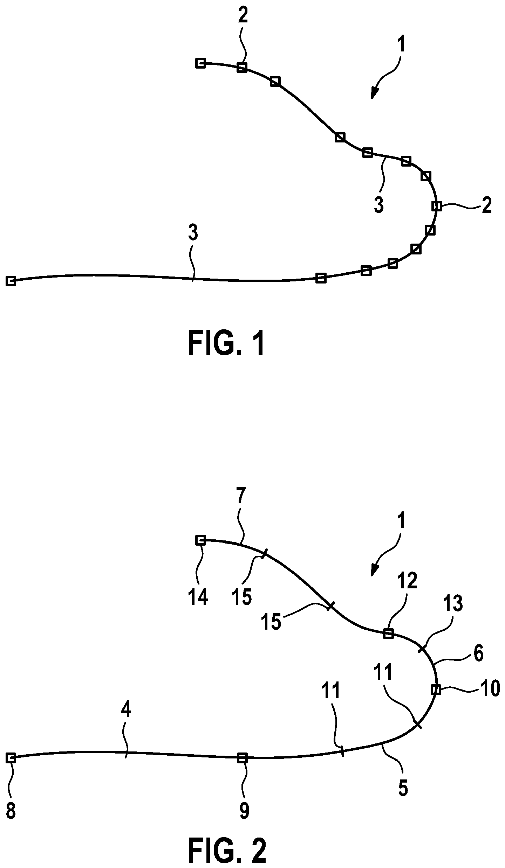

In Figur 1 ist der Verlauf eines Straßenabschnitts 1 mit Stützstellen 2 dargestellt, die durch kleine Quadrate symbolisiert werden, welche die Grundlage für die Rekonstruktion des Straßenverlaufes mit Hilfe eines Polygonzuges bilden. Die einzelnen Stützstellen 2 liegen auf dem realen Verlauf der Strasse. In der internen Repräsentation und der visuellen Darstellung auf einer nicht dargestellten Anzeigeeinrichtung, zum Beispiel in Form eines Displays oder eines Bildschirmes, sind die Stützstellen 2, abweichend zu der Darstellung in Figur 1, durch geradlinige Strecken verbunden, so dass sich der Verlauf der Strasse 1 als eine Zusammensetzung oder Aneinanderkettung linearer Abschnitte 3, und damit als Polygonzug ergibt. Aus Gründen der besseren Übersichtlichkeit sind in Figur 1 nur einige Stützstellen 2 und Straßenabschnitte 3 mit einer Bezugsziffer versehen.

Insgesamt sind zur Darstellung des Verlaufs der Strasse 1 in der Figur 1 vierzehn Stützstellen 2 erforderlich, die auf einem elektronisch auslesbaren Datenmedium, beispielsweise einer CD-ROM, gespeichert werden müssen. Besonders in kurvenreichen Straßenverläufen, in der Figur 1 am rechten Rand dargestellt, werden viele Stützstellen 2 benötigt, um eine hinreichend genaue Darstellung des Straßenverlaufes zu erhalten.

Der Verlauf derselben Strasse 1 ist in Figur 2 wiedergegeben. Im Unterschied zur Figur 1 werden hier aber weniger Stützstellen 8, 9, 10, 11, 12, 14 und 15 benötigt, welche auch nicht als Grundlage für die Rekonstruktion des Straßenverlaufes mit Hilfe eines Polygonzuges dienen, sondern als Grundlage für die Rekonstruktion des Straßenverlaufes mit Hilfe einer Berechnung, wie sie aus der WO 2005/111543 A1 bekannt ist.

Der Verlauf der Strasse 1 ist dabei in einander nachfolgende Segmente 4, 5, 6 und 7 unterteilt. Die einzelnen Segmente 4 bis 7 weisen voneinander abweichende Krümmungsverläufe auf. So ist die geometrische Form des Segmentes 4 eine Gerade, die geometrische Form des Segmentes 5 ein Klothoidenübergang, welcher wiederum in ein kreisförmiges Segment 6 übergeht. Daran schließt sich das Segment 7 an, welches die Form einer Klothoide mit einer S-Kurve hat.

Die Stützstellen 8, 9, 10, 12 und 14 bilden jeweils Segmentanfangs- und/oder - endpunkte, welche die einzelnen Segmente 4 bis 7 derart begrenzen, dass sich die geometrische Form des jeweiligen Segmentes zwischen den Segmentanfangs- und Segmentendpunkten nicht ändert. Das Segment 4 ist als lineares Segment durch den Anfangspunkt 8 und einen Endpunkt 9 exakt definiert. Weitere Hilfsstützstellen zwischen dem Anfangspunkt 8 und dem Endpunkt 9 sind nicht erforderlich. Der Punkt 9 ist sowohl der Endpunkt des Segmentes 4 als auch zugleich der Anfangspunkt des Segmentes 5. Das Segment 5 benötigt als Klothoidenübergang neben dem Anfangspunkt 9 und dem Endpunkt 10 zwei zusätzliche Hilfsstützstellen 11, um mit diesen vier Randwertbedingungen (Anfangs- und Endpunkt sowie zwei Hilfsstützstellen) den Verlauf der Strasse exakt festzulegen und berechnen zu können.

Das Segment 6 ist als Kreisabschnitt durch den Anfangspunkt 10, den Endpunkt 12 und eine zusätzlichen Hilfsstützstelle 13, die auf dem Kreisbogen liegt, genau definiert. Die Klothoide des Segmentes 7 braucht zur exakten Festlegung der Gestalt und zur Bestimmung bzw. Berechnung des Verlaufes den Anfangspunkt 12 und den Endpunkt 14 des Segmentes 7 sowie zwei zusätzliche Hilfsstützstellen 15.

Der Verlauf der Strasse 1 ist somit in der Figur 2 durch weniger Stützstellen als in der Figur 1 definiert, nämlich durch nur fünf Anfangs- bzw. Endpunkte und fünf zusätzliche Hilfsstützstellen. Es ist also mit einer geringeren Datenmenge eine höhere Genauigkeit erzielbar, allerdings unter Inkaufnahme eines erhöhten Rechenbedarfs.

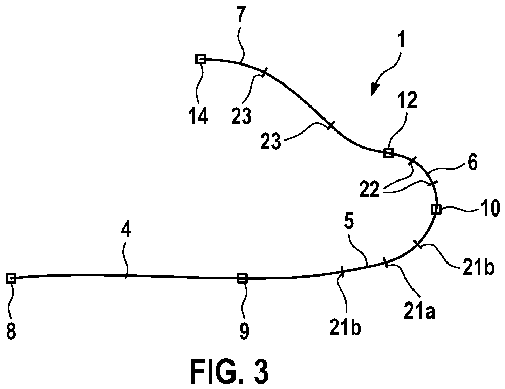

In Figur 3 ist der Straßenverlauf gemäß Figur 1 mit einer erfindungsgemäßen Verteilung von Stützstellen gezeigt.

Die Stützstellen 8, 9, 10, 12 und 14 bilden analog zur Darstellung in Figur 2 jeweils wieder Segmentanfangs- und/oder -endpunkte, welche die einzelnen Segmente 4 bis 7 derart begrenzen, dass sich die geometrische Form des jeweiligen Segmentes zwischen den Segmentanfangs- und Segmentendpunkten nicht ändert. Die Segmentanfangs- und -endpunkte können durch Attribute, zum Beispiel in Form von Flags, gekennzeichnet werden, um sie von sonstigen Stützstellen, wie Hilfsstützstellen, zu unterscheiden. Im Gegensatz zu Figur 2 sind aber innerhalb einiger Segmente mehr Hilfsstützstellen zwischen den jeweiligen Segmentanfangs- und Segmentendpunkten vorgesehen. Das Segment 4 ist als lineares Segment durch den Anfangspunkt 8 und einen Endpunkt 9 exakt definiert, so dass auch bei der erfindungsgemäßen Abbildung des Straßenverlaufes in einer digitalen Straßenkarte keine weiteren Hilfsstützstellen zwischen dem Anfangspunkt 8 und dem Endpunkt 9 erforderlich sind. Auch bei der erfindungsgemäßen Abbildung des Straßenverlaufs dient ein Segmentendpunkt, wie der Endpunkt 9 des Segmentes 4 zugleich als Segmentanfangspunkt des nachfolgenden Segmentes 5. Das Segment 5, welches die Form eines Klothoidenüberganges aufweist, weist neben dem Anfangspunkt 9 und dem Endpunkt 10 drei zusätzliche Hilfsstützstellen 21 auf, um für Darstellungsmaßstäbe, welche kleiner als ein vorgegebener Grenzmaßstab sind, durch einfaches geradliniges Verbinden der Stützstellen eine ausreichende Abbildungsgenauigkeit des Straßenverlaufes zu erreichen.

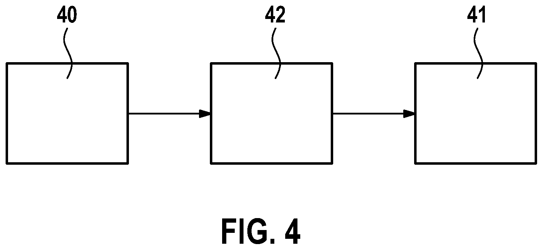

Dem kreisabschnittsförmigen Segment 6 sind die Stützstellen 10 und 12 als Anfangs- bzw. Endpunkt zugeordnet. Des weiteren sind zwei zusätzliche Hilfsstützstellen 22 vorgesehen, welche auf dem Kreisbogen liegen, um für Darstellungsmaßstäbe, welche kleiner als der vorgegebene Grenzmaßstab sind, durch einfaches geradliniges Verbinden der Stützstellen eine ausreichende Abbildungsgenauigkeit des Straßenverlaufes zu erreichen. Für die Klothoide des Segmentes 7 sind neben dem Anfangspunkt 12 und dem Endpunkt 14 zwei zusätzliche Hilfsstützstellen 23 vorgesehen. Diese Hilfsstützstellen 23 entsprechen dabei exakt den Hilfsstützstellen 15 gemäß Figur 2, da ein geradliniges Verbinden der Stützstellen 12, 14 und 23 bereits einen Polygonzug mit der erforderliche Abbildungsgenauigkeit erzeugt, so dass innerhalb dieses Segments keine weiteren Hilfsstützstellen erforderlich sind.
Der Verlauf der Strasse 1 ist somit in der Figur 3 durch weniger Stützstellen als in der Figur 1 und durch mehr Stützstellen als in der Figur 2 definiert.
Erfindungsgemäß wird ein Straßenverlauf mit Stützstellen, wie in Figur 3 dargestellt, in einer digitalen Straßenkarte 40 (vgl. Figur 4) abgebildet. Zur Darstellung des Straßenverlaufs auf einer Anzeigeeinrichtung 41 mit automatisch und/oder manuell einstellbarem Darstellungsmaßstab, wird der Straßenverlauf dann aus den in der digitalen Straßenkarte 40 abgelegten Daten mit Hilfe einer Auswerteeinheit 42 rekonstruiert. Dabei wird der Straßenverlauf bis zu einem vorgegebenen Grenzmaßstab, von z.B. 1:100.000, mit Hilfe eines Polygonzuges rekonstruiert. Bei größeren Darstellungsmaßstäben dagegen werden anhand der Lage der jeweiligen Stützstellen sowie abgespeicherter Informationen über die geometrische Form der einzelnen Segmente zusätzliche virtuelle Stützstellen berechnet, so dass der Straßenverlauf mit erhöhter Genauigkeit rekonstruiert werden kann.
Somit wird einerseits bei großen Maßstäben eine zeitsparende Rekonstruktion des Straßenverlaufes ermöglicht und andererseits bei kleinen Maßstäben eine hohe Abbildungsgenauigkeit sichergestellt.
Die jeweils benötigte Anzahl von Stützstellen pro Segment wird erfindungsgemäß in Abhängigkeit von einer Auflösung der Anzeigeeinrichtung 41 und vorteilhaft auch von der geometrischen Form des jeweiligen Segmentes festgelegt. Auf diese Weise kann sichergestellt werden, dass exakt so viele Hilfsstützstellen vorgesehen werden, wie zur Erreichung der geforderten Abbildungsgenauigkeit durch geradliniges Verbinden der Stützstellen erforderlich sind. Zur Festlegung der Anzahl und der Lage der erforderlichen Hilfsstützstellen kann ein Ausdünnungs-Algorithmus, wie z.B. der Douglas-Peucker-Algorithmus, eingesetzt werden.
Abhängig vom eingestellten Darstellungsmaßstab kann es auch ausreichend sein, für einen Polygonzug nur eine Teilmenge der Hilfsstützstellen 21, 22 oder 23 zu nutzen. So ist es beispielsweise denkbar, das Segment 5 für einen ausreichend kleinen Darstellungsmaßstab mit entsprechend geringem Detaillierungsgrad, nur durch eine geradlinige Verbindung der Stützstellen 9, 21a und 10 zu rekonstruieren und die Hilfsstützstellen 21 b nicht zu berücksichtigen.

## Patentansprüche

1. Verfahren zur Darstellung eines Kurvenverlaufes, insbesondere eines Straßenverlaufes, auf einer Anzeigeeinrichtung (41) mit einstellbarem Darstellungsmaßstab, insbesondere in einem Kraftfahrzeug, wobei der Kurvenverlauf in einer Datenbank (40), insbesondere einer digitalen Straßenkarte, in aufeinanderfolgende Segmente (4, 5, 6, 7) unterteilt ist, denen Stützstellen (8, 9, 10, 12, 14, 21, 22, 23) zugeordnet sind und zu denen eine Information über eine jeweilige geometrische Form eines Segmentes (4, 5, 6, 7) hinterlegt ist, bei dem
- der Kurvenverlauf durch geradliniges Verbinden zumindest einer Teilmenge der Stützstellen (8, 9, 10, 12, 14, 21, 22, 23) rekonstruiert wird, solange der Darstellungsmaßstab kleiner als ein vorgegebener Grenzmaßstab ist und
- der Kurvenverlauf ansonsten in Abhängigkeit von den hinterlegten Informationen über die geometrischen Formen der Segmente (4, 5, 6, 7) sowie der Lage der jeweils zugeordneten Stützstellen (8, 9, 10, 12, 14, 21, 22, 23) berechnet wird, wobei die geometrischen Formen Geraden, Kreisbögen und Klothoiden umfassen; und
wobei der Kurvenverlauf auf der Anzeigeeinrichtung (41) mit einstellbarem Darstellungsmaßstab dargestellt wird.

2. Verfahren nach Anspruch 1, wobei den Segmenten (4, 5, 6, 7) jeweils mindestens zwei Stützstellen (8, 9, 10, 12, 14, 21, 22, 23) zugeordnet sind, von denen eine erste Stützstelle (8; 9; 10; 12) einen Segmentanfangspunkt und eine zweite Stützstelle (9; 10; 12; 14) einen Segmentendpunkt definiert, welche derart festgelegt sind, dass sich die geometrische Form des jeweiligen Segmentes (4, 5, 6, 7) zwischen den Segmentanfangs- und Segmentendpunkten (8, 9, 10, 12, 14) nicht ändert.

3. Verfahren nach einem der Ansprüche 1 oder 2, wobei die Anzahl der geradlinig zu verbindenden Stützstellen (8, 9, 10, 12, 14, 21, 22, 23) in Abhängigkeit von der gewünschten Genauigkeit, mit welcher Kurvenverlauf rekonstruiert wird, oder vom eingestellten Darstellungsmaßstab festgelegt wird.

4. Verfahren nach einem der Ansprüche 1 bis 3, wobei der Darstellungsmaßstab der Anzeigeeinrichtung manuell und/oder automatisch eingestellt werden kann.

5. Verfahren nach einem der Ansprüche 2 bis 4, wobei die Segmentanfangs- und -endpunkte mit Attributen versehen sind, welche sie von sonstigen Stützstellen unterscheiden.

6. Verfahren nach einem der Ansprüche 2 bis 5, wobei die Anzahl der Stützstellen (21, 22, 23) zwischen dem Segmentanfangs- und -endpunkt (8, 9, 10, 12, 14) eines Segmentes (4, 5, 6, 7) in Abhängigkeit von der geometrischen Form des Segmentes (4, 5, 6, 7) festgelegt wird.

7. Verfahren nach einem der Ansprüche 2 bis 6, wobei die Anzahl der Stützstellen (21, 22, 23) zwischen dem Segmentanfangs- und -endpunkt (8, 9, 10, 12, 14) eines Segmentes (4, 5, 6, 7) mit Hilfe eines Ausdünnungs-Algorithmus festgelegt wird.

8. Computerprogramm mit Programmbefehlen zur Durchführung des Verfahrens gemäß einem der Ansprüche 1-7.

9. Datenträger, welcher das Computerprogramm gemäß Anspruch 8 speichert.

10. Anordnung zur Darstellung eines Kurvenverlaufes, insbesondere eines Straßenverlaufes in einem Kraftfahrzeug, gemäß einem Verfahren nach einem der Ansprüche 1 bis 7, mit
- einer Datenbank (40), insbesondere einer digitalen Straßenkarte, in welcher der Kurvenverlauf in aufeinanderfolgende Segmente (4, 5, 6, 7) unterteilt ist, denen Stützstellen (8, 9, 10, 12, 14, 21, 22, 23) zugeordnet sind und zu denen eine Information über eine jeweilige geometrische Form eines Segmentes (4, 5, 6, 7) hinterlegt ist,
- einer Anzeigeeinrichtung (41) mit einstellbarem Darstellungsmaßstab und
- einer Auswerteeinheit (42), welche den Kurvenverlauf durch geradliniges Verbinden zumindest einer Teilmenge der Stützstellen (8, 9, 10, 12, 14, 21, 22, 23) rekonstruiert, solange der Darstellungsmaßstab kleiner als ein vorgegebener Grenzmaßstab ist und den Kurvenverlauf ansonsten in Abhängigkeit von den hinterlegten Informationen über die geometrischen Formen der Segmente (4, 5, 6, 7) sowie der Lage der jeweils zugeordneten Stützstellen (8, 9, 10, 12, 14, 21, 22, 23) berechnet; wobei die geometrischen Formen Geraden, Kreisbögen und Klothoiden umfassen.

## Claims

1. Method for depicting a curve profile, in particular a road profile, on a display device (41) with an adjustable scale of depiction, in particular in a motor vehicle, wherein the curve profile is divided in a database (40), in particular a digital road map, into successive segments (4, 5, 6, 7) that have associated interpolation points (8, 9, 10, 12, 14, 21, 22, 23) and for which a piece of information about a respective geometric shape of a segment (4, 5, 6, 7) is stored, in which
- the curve profile is reconstructed by connecting at least one subset of the interpolation points (8, 9, 10, 12, 14, 21, 22, 23) in a straight line while the scale of depiction is smaller than a prescribed limit scale, and
- the curve profile is otherwise computed on the basis of the stored information about the geometric shapes of the segments (4, 5, 6, 7) and the position of the respectively associated interpolation points (8, 9, 10, 12, 14, 21, 22, 23), the geometric shapes comprising straight lines, arcs and clothoids; and
wherein the curve profile is depicted on the display device (41) with an adjustable scale of depiction.

2. Method according to Claim 1, wherein each of the segments (4, 5, 6, 7) has at least two associated interpolation points (8, 9, 10, 12, 14, 21, 22, 23), of which a first interpolation point (8; 9; 10; 12) defines a segment starting point and a second interpolation point (9; 10; 12; 14) defines a segment end point, which are stipulated such that the geometric shape of the respective segment (4, 5, 6, 7) does not change between the segment starting and segment end points (8, 9, 10, 12, 14).

3. Method according to either of Claims 1 and 2, wherein the number of interpolation points (8, 9, 10, 12, 14, 21, 22, 23) to be connected in a straight line is stipulated on the basis of the desired accuracy with which the curve profile is reconstructed or on the basis of the adjusted scale of depiction.

4. Method according to one of Claims 1 to 3, wherein the scale of depiction of the display device can be adjusted manually and/or automatically.

5. Method according to one of Claims 2 to 4, wherein the segment starting and end points are provided with attributes distinguishing them from other interpolation points.

6. Method according to one of Claims 2 to 5, wherein the number of interpolation points (21, 22, 23) between the segment starting and end points (8, 9, 10, 12, 14) of a segment (4, 5, 6, 7) is stipulated on the basis of the geometric shape of the segment (4, 5, 6, 7).

7. Method according to one of Claims 2 to 6, wherein the number of interpolation points (21, 22, 23) between the segment starting and end points (8, 9, 10, 12, 14) of a segment (4, 5, 6, 7) is stipulated using a thinning-out algorithm.

8. Computer program having program instructions for performing the method according to one of Claims 1-7.

9. Data storage medium storing the computer program according to Claim 8.

10. Arrangement for depicting a curve profile, in particular a road profile in a motor vehicle, using a method according to one of Claims 1 to 7, having
- a database (40), in particular a digital road map, in which the curve profile is divided into successive segments (4, 5, 6, 7) that have associated interpolation points (8, 9, 10, 12, 14, 21, 22, 23) and for which a piece of information about a respective geometric shape of a segment (4, 5, 6, 7) is stored,
- a display device (41) with an adjustable scale of depiction and
- an evaluation unit (42) that reconstructs the curve profile by connecting at least one subset of the interpolation points (8, 9, 10, 12, 14, 21, 22, 23) in a straight line while the scale of depiction is smaller than a prescribed limit scale, and otherwise computes the curve profile on the basis of the stored information about the geometric shapes of the segments (4, 5, 6, 7) and the position of the respectively associated interpolation points (8, 9, 10, 12, 14, 21, 22, 23); the geometric shapes comprising straight lines, arcs and clothoids.

## Revendications

1. Procédé de représentation d'un tracé de courbe, en particulier d'un tracé de route, sur un dispositif d'affichage (41) muni d'une échelle de représentation réglable, en particulier dans un véhicule automobile, dans lequel, dans une base de données (40), en particulier une carte routière numérique, le tracé de courbe est subdivisé en segments successifs (4, 5, 6, 7) auxquels sont affectés des points de support (8, 9, 10, 12, 14, 21, 22, 23) et pour lesquels une information concernant une forme géométrique respective d'un segment (4, 5, 6, 7) est enregistrée, dans lequel
- le tracé de courbe est reconstruit en reliant linéairement au moins un sous-ensemble des points de support (8, 9, 10, 12, 14, 21, 22, 23), tant que l'échelle de représentation est plus petite qu'une échelle limite prédéterminée, et
- le tracé de courbe est par ailleurs calculé en fonction des informations stockées concernant les formes géométriques des segments (4, 5, 6, 7) et de la position des points de support (8, 9, 10, 12, 14, 21, 22, 23) respectivement affectés, dans lequel les formes géométriques comprennent des lignes droites, des arcs de cercle et des clothoïdes ; et
dans lequel le tracé de courbe est représenté sur le dispositif d'affichage (41) avec une échelle d'affichage réglable.

2. Procédé selon la revendication 1, dans lequel au moins deux points de support (8, 9, 10, 12, 14, 21, 22, 23) sont respectivement affectés aux segments (4, 5, 6, 7), dont un premier point de support (8 ; 9 ; 10 ; 12) définit un point de début de segment et un second point de support (9 ; 10 ; 12 ; 14) définit un point de fin de segment, lesquels sont déterminés de telle sorte que la forme géométrique du segment respectif (4, 5, 6, 7) entre les points de début et de fin de segment (8, 9, 10, 12, 14) ne varie pas.

3. Procédé selon l'une des revendications 1 ou 2, dans lequel le nombre de points de support (8, 9, 10, 12, 14, 21, 22, 23) devant être reliés linéairement est déterminé en fonction de la précision souhaitée avec laquelle le tracé de courbe est reconstruit ou de l'échelle de représentation réglée.

4. Procédé selon l'une des revendications 1 à 3, dans lequel l'échelle de représentation du dispositif d'affichage peut être réglée manuellement et/ou automatiquement.

5. Procédé selon l'une des revendications 2 à 4, dans lequel les points de début et de fin de segment sont dotés d'attributs qui les distinguent des autres points de support.

6. Procédé selon l'une des revendications 2 à 5, dans lequel le nombre de points de support (21, 22, 23) entre les points de début et de fin de segment (8, 9, 10, 12, 14) d'un segment (4, 5, 6, 7) est déterminé en fonction de la forme géométrique du segment (4, 5, 6, 7).

7. Procédé selon l'une des revendications 2 à 6, dans lequel le nombre de points de support (21, 22, 23) entre les points de début et de fin de segment (8, 9, 10, 12, 14) d'un segment (4, 5, 6, 7) est déterminé à l'aide d'un algorithme de dilution.

8. Programme d'ordinateur comportant des instructions destinées à la mise en oeuvre du procédé selon l'une des revendications 1-7.

9. Support de données qui stocke le programme d'ordinateur selon la revendication 8.

10. Système de représentation d'un tracé de courbe, en particulier d'un tracé de route dans un véhicule automobile, conformément à un procédé selon l'une des revendications 1 à 7, comportant
- une base de données (40), en particulier une carte routière numérique, dans lequel le tracé de courbe est subdivisé en segments successifs (4, 5, 6, 7) auxquels sont affectés des points de support (8, 9, 10, 12, 14, 21, 22, 23) et pour lesquels une information concernant une forme géométrique respective d'un segment (4, 5, 6, 7) est enregistrée,
- un dispositif d'affichage (41) muni d'une échelle de représentation réglable, et
- une unité d'évaluation (42) qui reconstruit le tracé de courbe en reliant linéairement au moins un sous-ensemble des points de support (8, 9, 10, 12, 14, 21, 22, 23), tant que l'échelle de représentation est plus petite qu'une échelle limite prédéterminée et calcule par ailleurs le tracé de courbe en fonction des informations stockées concernant les formes géométriques des segments (4, 5, 6, 7) et la position des points de support (8, 9, 10, 12, 14, 21, 22, 23) respectivement affectés ; dans lequel les formes géométriques comprennent des lignes droites, des arcs de cercle et des clothoïdes.
